# EUROPEAN PATENT APPLICATION

(11) **EP 4 546 669 A1**
(43) Date of publication of application: **30.04.2025**
(21) Application number: 23826226.5
(22) Date of filing: 14.06.2023
(51) Int. Cl.: H04B 10/272

(54) **ENHANCED OPTICAL NETWORK UNIT, PASSIVE OPTICAL NETWORK, AND COMMUNICATION METHOD**

(30) Priority: 24.06.2022 CN 202210722843
(71) Applicant: ZTE Corporation, Shenzhen, Guangdong 518057 (CN)
(72) Inventor: ZHU, Songlin, Shenzhen, Guangdong 518057 (CN); ZHANG, Weiliang, Shenzhen, Guangdong 518057 (CN)
(74) Representative: Canzler & Bergmeier Patentanwälte Partnerschaft mbB
(86) International application number: PCT/CN2023/100140
(87) International publication number: WO 2023/246577

(57) **Abstract**

Provided in the present disclosure is an enhanced optical network unit, which comprises a transceiving port, a receiving port, an optical signal sending module, a first optical signal receiving module and a second optical signal receiving module. The optical signal sending module and the first optical signal receiving module are connected to the transceiving port. The second optical signal receiving module is connected to the receiving port. The working wavelength of the first optical signal receiving module is a first wavelength, and the working wavelengths of the optical signal sending module and the second optical signal receiving module are a second wavelength. Further provided in the present disclosure are a passive optical network and a communication method.

## Description

### CROSS-REFERENCE TO RELATED APPLICATIONS

This application claims priority from the patent application No. 202210722843.7 filed with the China Patent Office on June 24, 2022, the entire contents of which are incorporated hereby by reference.

### TECHNICAL FIELD

The present disclosure relates to, but is not limited to, the field of optical network technology.

### BACKGROUND

In a passive optical network (PON), an optical line terminal (OLT) may implement networking by connecting a plurality of optical network units (ONUs) or optical network terminations (ONTs) through an optical distribution network (ODN).

However, the ONUs in the PON need to communicate with each other, which requires the OLT to forward signals and thus occupies the bandwidth for OLT downlink signals, causing reduced bandwidth utilization.

### SUMMARY

The present disclosure provides an enhanced optical network unit, a passive optical network, and a communication method.

In a first aspect, the present disclosure provides an enhanced optical network unit, including a transceiving port, a receiving port, an optical signal sending module, a first optical signal receiving module, and a second optical signal receiving module; wherein the optical signal sending module and the first optical signal receiving module are connected to the transceiving port; the second optical signal receiving module is connected to the receiving port; and the first optical signal receiving module has an operating wavelength being a first wavelength, while each of the optical signal sending module and the second optical signal receiving module has an operating wavelength being a second wavelength.

In a second aspect, the present disclosure provides a passive optical network, including a star coupler and at least two enhanced optical network units; wherein the star coupler includes a plurality of first side interfaces and a plurality of second side interfaces; the star coupler enables an optical signal input to any first side interface of the plurality of first side interfaces to be transmitted to any second side interface of the plurality of second side interfaces, and enables an optical signal input to any second side interface of the plurality of second side interfaces to be transmitted to any first side interface of the plurality of first side interfaces; and each of the at least two enhanced optical network units is any enhanced optical network unit as described herein; wherein receiving ports of the at least two enhanced optical network units are connected to the first side interfaces, and transceiving ports of the at least two enhanced optical network units are connected to the second side interfaces.

In a third aspect, the present disclosure provides a communication method for any passive optical network as described herein; wherein the method includes communication flows between enhanced optical network units; wherein in each communication flow between the enhanced optical network units, one of the enhanced optical network units is a source enhanced optical network unit, at least one of the enhanced optical network units is a target enhanced optical network unit, and the communication flow between the enhanced optical network units includes: transmitting, by an optical signal sending module of the source enhanced optical network unit, a local communication optical signal from the transceiving port to the second side interface of the star coupler; transmitting, by the star coupler, the local communication optical signal to at least a first side interface connected to the target enhanced optical network unit; and receiving, by the receiving port of the target enhanced optical network unit, the local communication optical signal.

### BRIEF DESCRIPTION OF DRAWINGS

FIG. 1 is a block diagram of a passive optical network;
FIG. 2 is a block diagram of an enhanced optical network unit according to the present disclosure;
FIG. 3 is a block diagram of a passive optical network according to the present disclosure;
FIG. 4 is a schematic diagram of a star coupler in a passive optical network according to the present disclosure;
FIG. 5 is a schematic diagram of a star coupler in another passive optical network according to the present disclosure;
FIG. 6 is a block diagram of an optical line terminal in a passive optical network according to the present disclosure;
FIG. 7 is a block diagram of a general-purpose optical network unit in a passive optical network according to the present disclosure;
FIG. 8 is a block diagram of another passive optical network according to the present disclosure;
FIG. 9 is a block diagram of an enhanced optical network unit assembly in another passive optical network according to the present disclosure;
FIG. 10 is a block diagram of another passive optical network according to the present disclosure;
FIG. 11 is a block diagram of another passive optical network according to the present disclosure; and
FIG. 12 is a flowchart of a communication method according to the present disclosure.

### DETAIL DESCRIPTION OF EMBODIMENTS

To improve understanding of the technical solution of the present disclosure for those skilled in the art, the enhanced optical network unit, the passive optical network, and the communication method according to the implementations of the present disclosure will be described in detail below in conjunction with the accompanying drawings.

The present disclosure will be described more sufficiently below with reference to the accompanying drawings, where the illustrated implementations may be embodied in different forms. However, the present disclosure should not be construed as being limited to the implementations set forth herein. Rather, these implementations are provided so that the present disclosure will be thorough and complete, and will fully convey the scope of the present disclosure to those skilled in the art.

The accompanying drawings are provided for further understanding of the implementations of the present disclosure and constitute a part of the specification. Hereinafter, these drawings are intended to explain the present disclosure together with the detailed implementations, but should not be considered as a limitation to the present disclosure. The above and other features and advantages will become more apparent to those skilled in the art by describing the detailed implementations with reference to the accompanying drawings.

The present disclosure may be described with reference to plan and/or sectional views in idealized representations of the present disclosure. Accordingly, the example illustrations may be modified in accordance with the manufacturing process and/or the tolerance.

Implementations of the present disclosure and features thereof may be combined with each other without conflict.

The terminology used in the present disclosure is for the purpose of describing particular implementations only and is not intended to be limiting of the present disclosure. As used in the present disclosure, the term "and/or" includes any and all combinations of one or more of the associated listed items. As used in the present disclosure, the singular forms "a", "an" and "the" are intended to include the plural forms as well, unless the context clearly indicates otherwise. As used herein, the terms "comprise" and "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used in the present disclosure have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined in the present disclosure.

The present disclosure is not limited to the implementations shown in the drawings, but includes modifications of configurations formed based on a manufacturing process. Therefore, the regions illustrated in the figures have schematic properties, and the shapes of the regions shown in the figures illustrate specific shapes of regions of elements, but are not intended to be limitative.

With the development of the technology, passive optical network (PON) technologies of higher bandwidths have emerged, such as gigabit passive optical network (GPON), Ethernet passive optical network (EPON), and the like.

The PON is a point-to-multipoint network configured for branching/coupling, multiplexing/demultiplexing, and the like of optical signals between an optical line terminal (OLT) and an optical network unit (ONU), and may include optical passive devices such as an optical fiber, an optical splitter, an optical coupler, an optical fiber connector, a wavelength division multiplexer, and the like.

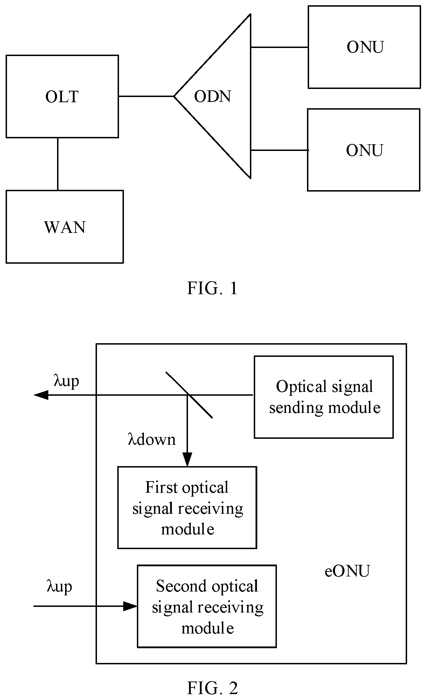

Referring to FIG. 1, an OLT in a PON may implement networking by connecting a plurality of ONUs through a 1*N optical distribution network (ODN) to form a point-to-multipoint network, so that the cost of optical fibers can be significantly reduced compared with a point-to-point topology. Further, the OLT may be connected to a wide area network through an uplink port.

With the applications of fiber to the home (FTTH) and fiber to the room (FTTR) technologies in PON, more and more ONUs are provided to one OLT, and the demands on mutual communication between ONUs are also increased.

In some existing art, the mutual communication between ONUs requires signal forwarding through the OLT, that is, the ONU sends an optical signal to the OLT in uplink, and the OLT sends the optical signal to a target ONU in downlink. As can be seen, this method needs to occupy the bandwidth for OLT downlink signals, causing reduced bandwidth utilization.

In a first aspect, the present disclosure provides an enhanced optical network unit.

The enhanced optical network unit (eONU) is a novel optical network unit (ONU) provided in the present disclosure.

For simplicity, hereinafter, eONU represents an enhanced optical network unit, ONU represents all optical network units, and OLT represents an optical signal terminal.

Referring to FIG. 2, the eONU of the present disclosure includes a transceiving port, a receiving port, an optical signal sending module, a first optical signal receiving module, and a second optical signal receiving module. The optical signal sending module and the first optical signal receiving module are connected to the transceiving port. The second optical signal receiving module is connected to the receiving port. The first optical signal receiving module has an operating wavelength being a first wavelength, while each of the optical signal sending module and the second optical signal receiving module has an operating wavelength being a second wavelength.

Referring to FIG. 2, the eONU of the present disclosure includes the optical signal sending module and the first optical signal receiving module connected to a bidirectional transceiving port.

The transceiving port is a bidirectional port, which means that an optical signal input through the transceiving port can be received by the first optical signal receiving module, and an optical signal sent from the optical signal sending module can be output through the transceiving port.

Referring to FIG. 2, the first optical signal receiving module and the optical signal sending module may be connected to the transceiving port through a wavelength division multiplexer (represented by an oblique line in the figure), so that an optical signal input to the transceiving port can enter the first optical signal receiving module through the wavelength division multiplexer, and an optical signal sent from the optical signal sending module can enter the transceiving port through the wavelength division multiplexer.

The optical signal sending module is also referred as "burst optical signal sending module", and in a conventional ONU, the burst optical signal sending module is configured to send an uplink optical signal to the OLT; The first optical signal receiving module is also referred to as "continuous optical signal receiving module", and in a conventional ONU, the continuous optical signal receiving module is configured to receive a downlink optical signal sent from the OLT.

Referring to FIG. 2, the receiving port of the eONU in the present disclosure can only receive signals. The second optical signal receiving module is also referred to as "burst optical signal receiving module", and has the same operating wavelength as the optical signal sending module (burst optical signal sending module), i.e., a second wavelength (λᵤₚ), which is the wavelength used by the ONU to send a burst uplink optical signal to the OLT, so that the burst optical signal receiving module can receive the optical signal sent from the burst optical signal sending module. The first optical signal receiving module has an operating wavelength being a first wavelength (λ_{down}), which is the wavelength used by the OLT to send continuous downlink optical signals to the ONU.

The second optical signal receiving module (burst optical signal receiving module) of the eONU in the present disclosure is connected to the receiving port, while the first optical signal receiving module (continuous optical signal receiving module) and the optical signal sending module (burst optical signal sending module) are connected to the transceiving port. The optical signal sending module and the second optical signal receiving module have the same operating wavelength, and the two ports are connected to a star coupler. Therefore, when a local communication optical signal is sent from the optical signal sending module of any eONU, the local communication optical signal can be transmitted to second optical signal receiving modules of other eONUs through the star coupler, so that the communication between the optical network units can be implemented without the OLT, which will not occupy the bandwidth for OLT downlink signals and thus improve the bandwidth utilization. Meanwhile, since the first optical signal receiving module and the optical signal sending module in the present disclosure are connected to the transceiving port like in a conventional ONU, and have the same operating wavelength relationship as that in the conventional ONU, the original wavelength planning does not need to be changed in the present disclosure, and during mutual communication of the eONUs, the process of sending information from an eONU is equivalent to the process of sending information to the OLT from a conventional ONU (but other eONUs may directly receive the sent information), so that the mutual communication between the eONUs may be implemented through the same module as that used for communication with the OLT without switching between modes, which process is simple and easy to implement. In addition, according to the present disclosure, the enhanced optical network unit has two ports respectively connected to the interfaces of the star coupler at different sides, so that an optical signal sent from the optical signal sending module can be transmitted to other enhanced optical network units simply by passing through the star coupler once (without being reflected), and due to the reduced number of passages through the star coupler, the optical signal has a small insertion loss, which is beneficial to practical applications.

In some implementations, the first wavelength is different from the second wavelength.

As an implementation of the present disclosure, the continuous optical signal receiving module may have an operating wavelength (second wavelength) different from the first wavelength.

In some implementations, the eONU further includes a virtual OLT module; and the virtual OLT module is configured to simulate operation of an OLT.

As an implementation of the present disclosure, the eONU further includes a virtual OLT module, so that the eONU can virtually implement functions of an OLT (a virtual OLT mode).

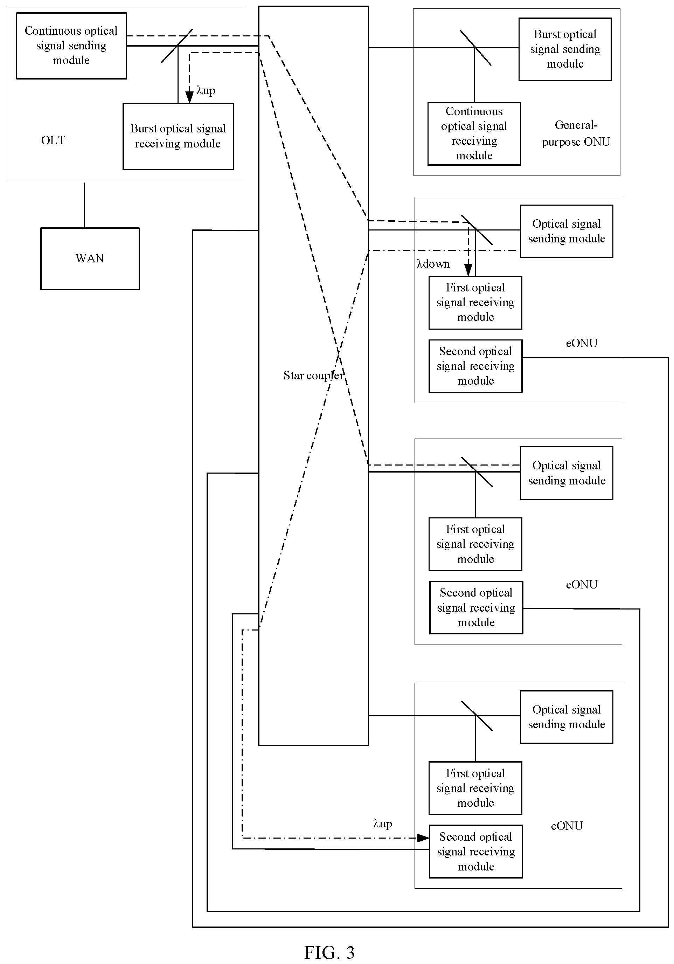

In a second aspect, referring to FIG. 3, the present disclosure provides a passive optical network, including a star coupler and at least two eONUs. The star coupler includes a plurality of first side interfaces and a plurality of second side interfaces. The star coupler enables an optical signal input to any first side interface to be transmitted to any second side interface, and enables an optical signal input to any second side interface to be transmitted to any first side interface. Each eONU is any eONU provided in the implementations of the present disclosure. Receiving ports of the eONUs are connected to the first side interfaces, and transceiving ports are connected to the second side interfaces.

As an implementation of the present disclosure, a plurality of eONUs in the implementation of the present disclosure may be connected by the star coupler to form a passive optical network (PON).

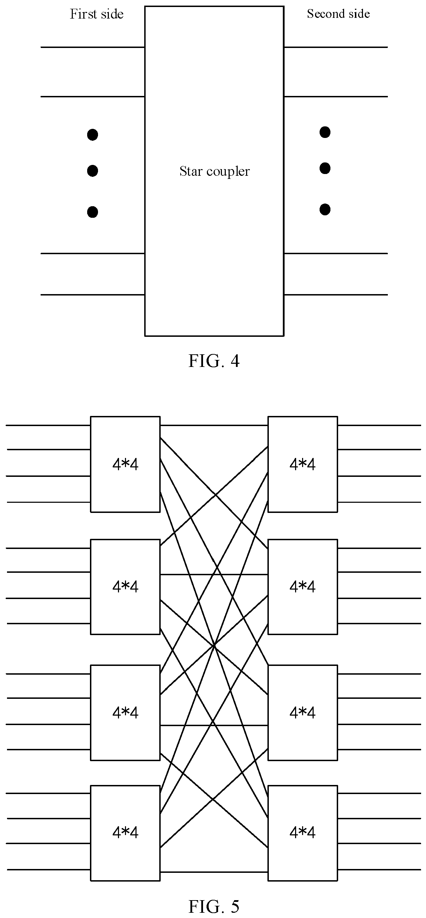

Referring to FIG. 4, the star coupler includes two sides (a first side and a second side, i.e., the left side and the right side in the figure), on each of which a plurality of interfaces (first side interfaces and second side interfaces) are provided, and the star coupler can enable an optical signal input to any interface on one side to be output from any interface on the other side.

It should be understood that the first side and the second side are just two opposite sides of the star coupler, and that there is no essential difference between the two sides when no other devices are connected.

In some implementations, the number of first side interfaces of the star coupler is equal to the number of second side interfaces.

As an implementation of the present disclosure, referring to FIG. 3, the same number of interfaces may be provided on two sides of the star coupler, i.e., the star coupler may be in an N*N form.

It should be understood that it is also possible that different numbers of interfaces are provided on two sides of the star coupler, which may be determined depending on the devices to be connected.

The star coupler may be a waveguide star coupler with low insertion loss, or a fiber fused biconical taper star coupler.

Referring to FIG. 5, a plurality of low-order star couplers may be combined into a high-order star coupler. For example, eight 4*4 star couplers are combined into a 16*16 star coupler.

Referring to FIG. 3, in the passive optical network, the receiving port of each eONU may be connected to one first side interface of the star coupler, while the transceiving port of each eONU may be connected to one second side interface of the star coupler.

In other words, each eONU is connected to one interface on each side of the star coupler simultaneously, and the star coupler has the same number of interfaces connected to the eONU on both sides.

In some implementations, the star coupler is configured to transmit an optical signal input to any first side interface to all the second side interfaces, and transmit an optical signal input to any second side interface to all the first side interfaces.

As an implementation of the present disclosure, the star coupler may be a device that "broadcasts" an optical signal input to an interface on one side to all interfaces on the other side.

It should be understood that it is also possible to control the star coupler to transmit the optical signal to only one or some designated interfaces by some means.

In some implementations, the passive optical network further includes an OLT; and the OLT is connected to the first side interface.

As an implementation of the present disclosure, referring to FIG. 3, the passive optical network may further include an OLT, and the OLT may be connected to one first side interface of the star coupler.

For example, the OLT may be connected to one interface (e.g., interface No. 1) on the first side. Therefore, referring to FIG. 3, when the star coupler is in an N*N form (where N is an integer greater than or equal to 3), at most (N-1) eONUs may be connected, and if (N-1) eONUs are connected to the star coupler, one "surplus" interface is present on the right side, which may be spare or connected to a conventional ONU, or the like.

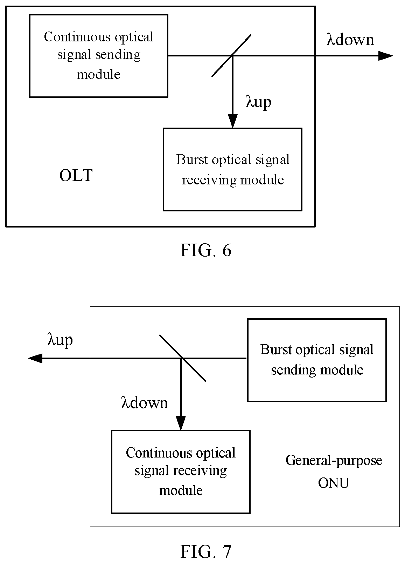

Referring to FIG. 6, the OLT includes a burst optical signal receiving module (with an operating wavelength being the second wavelength), and a continuous optical signal sending module (with an operating wavelength being the first wavelength), which are also connected (e.g., by a wavelength division multiplexer represent by an oblique line in the figure) to a bidirectional port, and the bidirectional port is connected to a first side interface of the star coupler.

Therefore, referring to the two dashed lines connected to the OLT in FIG. 3, for the communication between each eONU and the OLT, an optical signal (having the first wavelength) sent by the OLT in downlink may be transmitted from a first side interface to a second side interface connected to the eONU, and then enters the first optical signal receiving module from the transceiving port of the eONU. An optical signal (having the second wavelength) sent from the optical signal sending module of the eONU may enter the second side interface from the transceiving port, and then enter the first side interface connected to the OLT to be transmitted to the OLT in uplink (in the figure, the eONU sending the optical signal to the OLT and the eONU receiving the optical signal from the OLT are not the same one).

To implement mutual communication between the eONUs, referring to the dash-dot line in FIG. 3, an optical signal (having the second wavelength) sent from the optical signal sending module of an eONU (source eONU) that is to send the optical signal enters a second side interface from the transceiving port of the source eONU, and then enters a first side interface connected to another eONU (target ONU) that is to receive the optical signal, and then is further transmitted to the receiving port of the target eONU to be received by the second optical signal receiving module of the target eONU. That is, the optical signal mutually communicated between the eONUs only needs to pass through the star coupler once.

In some implementations, when the star coupler is in a "broadcast" mode, the target eONU is specified by an upper layer.

When the star coupler is in the "broadcast" mode, the optical signal sent from each device will be received by a plurality of other devices at the same time. For example, a downlink optical signal sent from the OLT will be received by all eONUs at the same time, and an uplink optical signal sent from an eONU (including an optical signal to the OLT and an optical signal to other ONUs) will also be received by the OLT and all eONUs (including the sender itself) at the same time. In this case, one or more eONUs may be specified as target eONUs by an upper layer (e.g., the OLT), and only the target eONU(s) actually process the received optical signal(s).

It should be understood that the source eONU and the target eONU are defined for each information transmission process between the eONUs, and may differ in different information transmission processes.

In some implementations, a communication slot for the communication flow between the eONUs is determined through upper layer dynamic bandwidth allocation.

As an implementation of the present disclosure, the communication slot for communication between the eONUs may be determined by an upper layer (such as the OLT) through dynamic bandwidth allocation (DBA).

In some implementations, the passive optical network further includes at least one general-purpose ONU; and the general-purpose ONU is connected to a second side interface.

As an implementation of the present disclosure, the passive optical network may further have a conventional ONU (general-purpose ONU) connected to a second side interface thereof.

Referring to FIG. 7, the general-purpose ONU includes a bidirectional transceiving port, while the continuous optical signal receiving module (with an operating wavelength being the first wavelength) and the burst optical signal sending module (with an operating wavelength being the second wavelength) are connected to the transceiving port (for example, by a wavelength division multiplexer represented by an oblique line in the figure), and the transceiving port is further connected to the second side interface.

Therefore, for the OLT, the general-purpose ONU is equivalent to a conventional ONU connected thereto, and the OLT and the general-purpose ONU can communicate with each other. Other eONUs perform "partial communication" with the general-purpose ONU. In other words, the general-purpose ONU may send an optical signal to other eONUs through the burst optical signal sending module thereof, but cannot directly receive an optical signal sent from other eONUs (unless an optical signal forwarded through the OLT), because the general-purpose ONU does not have a second optical signal receiving module.

It should be understood that in the passive optical network of the present disclosure, the mutual communication between an eONU and the general-purpose ONU can be implemented by means of forwarding through the OLT. In other words, the passive optical network of the present disclosure has all functions of a conventional passive optical network.

It should be understood that the above communication process between the eONUs is independent of the OLT, and therefore, the presence of the OLT in the passive optical network is not necessary for communication between the eONUs.

For example, without an OLT, the passive optical network is equivalent to a "local area network" formed by eONUs which can communicate locally with each other.

As can be seen, the second optical signal receiving module (burst optical signal receiving module) of the eONU in the present disclosure is connected to the receiving port, while the first optical signal receiving module (continuous optical signal receiving module) and the optical signal sending module (burst optical signal sending module) are connected to the transceiving port. The optical signal sending module and the second optical signal receiving module have the same operating wavelength, and the two ports are connected to a star coupler. Therefore, when a local communication optical signal is sent from the optical signal sending module of any eONU, the local communication optical signal may be transmitted to second optical signal receiving modules of other eONUs through the star coupler, so that the communication between the optical network units can be implemented without the OLT, which will not occupy the bandwidth for OLT downlink signals and thus improve the bandwidth utilization. Meanwhile, since the first optical signal receiving module and the optical signal sending module in the present disclosure are connected to the transceiving port like in a conventional ONU, and have the same operating wavelength relationship as that in the conventional ONU, the original wavelength planning does not need to be changed in the present disclosure, and during mutual communication of the eONUs, the process of sending information from an eONU is equivalent to the process of sending information to the OLT from a conventional ONU(but other eONUs may directly receive the sent information), so that the mutual communication between the eONUs may be implemented through the same module as that used for communication with the OLT without switching between modes, which process is simple and easy to implement. In addition, according to the present disclosure, the enhanced optical network unit has two ports respectively connected to the side interfaces of the star coupler at different sides, so that an optical signal sent from the optical signal sending module can be transmitted to other enhanced optical network units simply by passing through the star coupler once (without being reflected), and due to the reduced number of passages through the star coupler, the optical signal has a small insertion loss, which is beneficial to practical applications.

In some implementations, one of the eONUs is a management eONU which has a virtual OLT module.

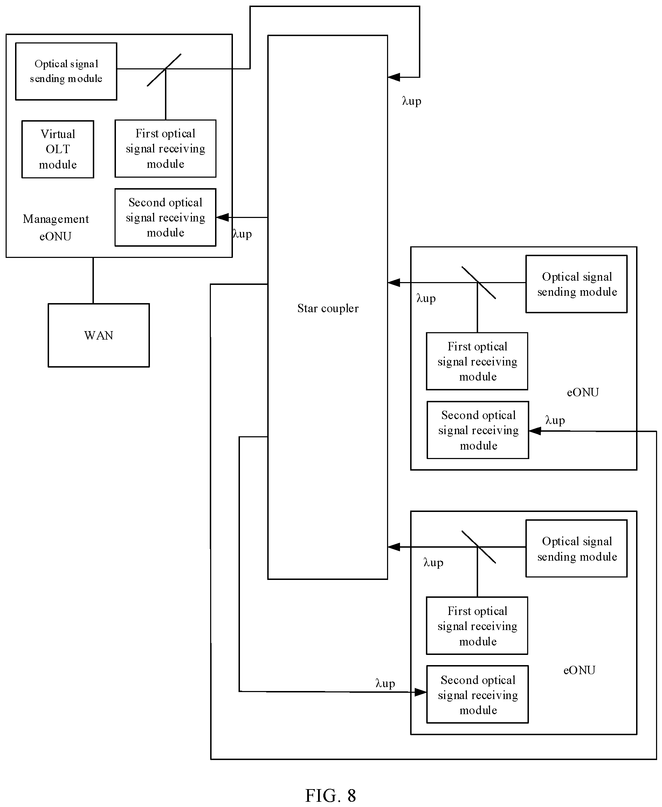

As an implementation of the present disclosure, referring to FIG. 8, when there is no OLT in the passive optical network (including the case of an OLT failure, or the like), an eONU (management eONU) having the virtual OLT module may be selected to simulate the OLT for management (i.e., a virtual OLT mode is adopted).

It should be understood that each of a plurality of eONUs in the passive optical network may have a virtual OLT module, but only one of them can serve as a management eONU.

As an implementation of the present disclosure, referring to FIG. 8, the management eONU and the other eONUs still adopt the above connection scheme (in FIG. 8, only the position of the management eONU is changed to the left side, while the connection relationship remains unchanged).

As described above, the above connection scheme can help to implement communication between the eONUs, so that for the management eONU, its communication with other eONUs is equivalent to the communication between an OLT and ONUs; while other eONUs except the management eONU can still communicate with each other in the above manner.

It should be understood that when there is a management eONU, the work of specifying a target eONU, and the work of allocating a communication slot for communication between the eONUs, can also be performed by the management eONU.

In other words, the management eONU can actually replace the OLT to serve as an uplink port for accessing the wide area network, and manage other eONUs. That is, the management eONU (including a subsequent eONU assembly with a management eONU) can also be connected to the wide area network through an uplink port (e.g., a service port thereof).

In some implementations, a three-port circulator includes a first port, a second port and a third port. A signal input to the first port is transmittable and only transmittable to the second port, and a signal input to the second port is transmittable and only transmittable to the third port. In the eONU assembly, the transceiving port and the receiving port of the eONU are connected to the first port and the third port, respectively, and the second port is an external port of the eONU assembly.

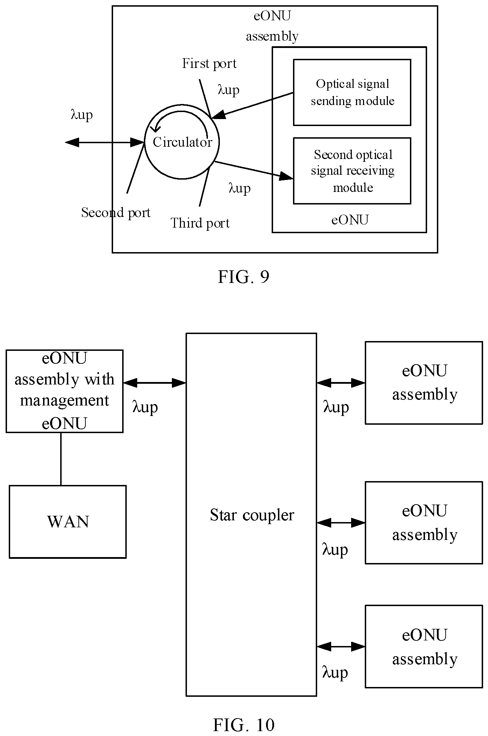

As can be seen, referring to FIGs. 8 and 9, when there is no physical OLT, the first optical signal receiving module in the eONU actually does not operate, and there is no optical signal of the first wavelength in the passive optical network, so that both the first optical signal receiving module and the first wavelength can be disabled, which is equivalent to that there is no first optical signal receiving module in the eONU.

Therefore, as an implementation of the present disclosure, the three-port circulator and the eONU may be combined into an "eONU assembly".

The three-port circulator is a device that enables unidirectional transmission of a signal therein (as shown by the arrow directions in FIGs. 9 and 10). Each three-port circulator includes three ports, and referring to the arrow directions in FIG. 9, a signal input to the first port is transmittable and only transmittable the second port, a signal input to the second port is transmittable and only transmittable to the third port, and a signal input to the third port cannot be output any more. Therefore, the first port is a unidirectional inputting port, the third port is a unidirectional outputting port, and the second port is a bidirectional port.

Referring to FIG. 9, the transceiving port and the receiving port of the eONU (including the management eONU and other eONUs) may be sequentially and respectively connected to the first port and the third port of the three-port circulator, while the second port serves as an external port of the eONU assembly.

As can be seen, in the eONU assembly, it is equivalent to that two ports of the eONU are combined into a "single fiber", which can perform bidirectional transmission of an optical signal of the second wavelength (in such case, the first optical signal receiving module does not operate).

In some implementations, the external port of the eONU assembly with the management eONU is connected to a first side interface; and the external ports of other eONU assemblies except the eONU assembly with the management eONU are connected to the second side interfaces.

As an implementation of the present disclosure, referring to FIG. 10, when the eONU forms an eONU assembly, the eONU assembly corresponding to the management eONU may be connected to one first side interface of the star coupler (in place of the OLT), while other eONU assemblies may be connected to the second side interfaces of the star coupler.

In some implementations, the passive optical network further includes a plurality of three-port circulators. In some implementations, the first side interfaces and the second side interfaces are connected to the first port and the third port of each three-port circulator, respectively, and the external port of the eONU assembly is connected to the second port of each three-port circulator.

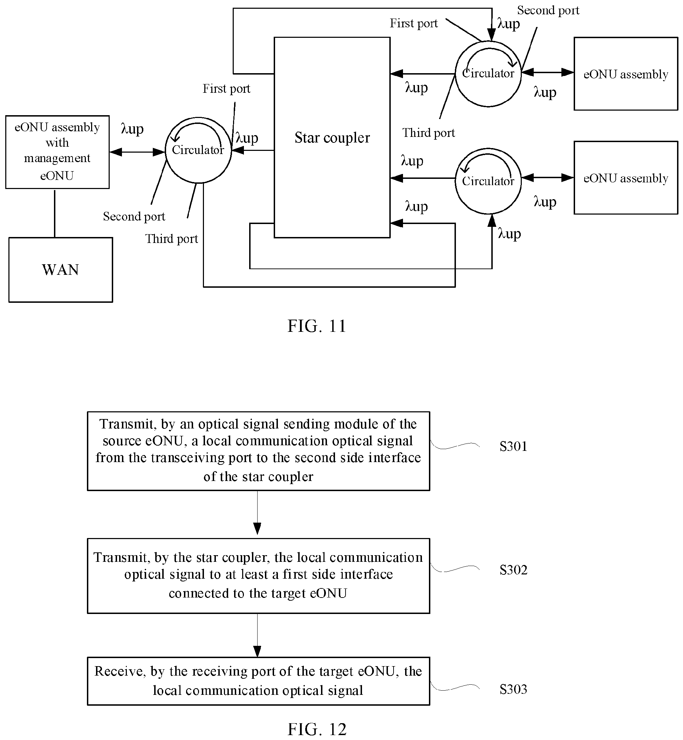

As another implementation of the present disclosure, referring to FIG. 11, the star coupler may be further connected to each eONU assembly through a three-port circulator (not the three-port circulator inside the ONU assembly). One first side interface and one second side interface of the star coupler are connected to the first port and the third port of each three-port circulator, respectively, while the second port of the three-port circulator is connected to the external port of the eONU assembly (i.e., the second port of the three-port circulator inside the eONU assembly). Therefore, it is equivalent to that one first side interface and one second side interface of the star coupler are combined into a "single fiber", which can perform bidirectional transmission of an optical signal of the second wavelength with the eONU assembly (since there is no optical signal of the first wavelength).

It should be understood that in this case, for the eONU, it is still equivalent to that the transceiving port is connected to a second side interface, and the receiving port is connected to a first side interface, but the connection is indirect connection via the circulator.

In a third aspect, referring to FIG. 12, the present disclosure provides a communication method for any passive optical network provided in the implementations of the present disclosure. The method of the present disclosure includes a communication flow between eONUs. In each communication flow between the eONUs, one of the eONUs is a source eONU, one or more of the eONUs are target eONUs, and the communication flow between the eONUs may include the following operations S301 to S303.

At S301, transmitting, by an optical signal sending module of the source eONU, a local communication optical signal from the transceiving port to the second side interface of the star coupler.

At S302, transmitting, by the star coupler, the local communication optical signal to at least a first side interface connected to each target eONU.

At S303, receiving, by the receiving port of each target eONU, the local communication optical signal.

To implement communication between the eONUs in the passive optical network of the present disclosure, in each communication process, a local communication optical signal is sent from the optical signal sending module of the source eONU, passes through the transceiving port, the second side interface, and the first side interface, and finally is transmitted to the receiving port of the target eONU.

It should be understood that the source eONU and the target eONU are defined for each communication process between the eONUs, and may differ in different communication processes.

It should be understood that in the passive optical network of the present disclosure, communication between an OLT and an eONU is also possible, and communication between eONUs may also be implemented indirectly by forwarding through the OLT; and when there is a management eONU, the eONU may communicate with other eONUs instead of the OLT, which are not described in detail here.

In some implementations, transmitting, by the star coupler, the local communication optical signal to at least the first side interface connected to each target eONU (S302) includes the following operation: S3021, transmitting, by the star coupler, the local communication optical signal to all the first side interfaces.

The target eONU is specified by an upper layer.

As an implementation of the present disclosure, the star coupler may be a device that "broadcasts" an optical signal input to an interface on one side to all interfaces on the other side. As a result, all devices (including the source eONU itself and the OLT) connected to the first side interfaces will receive the local communication optical signal. Therefore, an upper layer (e.g., OLT) has to specify one or more eONUs as the target eONUs.

It should be understood that it is also possible to control the star coupler to transmit the optical signal to only the first side interface connected to the target eONU by some means.

For example, the upper layer (e.g., OLT) may determine routing information of the local communication optical signal, and control the star coupler to transmit the local communication optical signal only to the first side interface connected to the target eONU according to the routing information; or an ID of a target eONU may be added into the local communication optical signal, while the star coupler stores a correspondence relationship between eONU IDs and the first side interfaces, so that the star coupler can determine the first side interface for receiving the local communication optical signal according to the ID of the target eONU, and only the connection between the second side interfaces and such first side interfaces is controlled to be enabled.

In some implementations, a communication slot for the communication flow between the eONUs is determined through upper layer dynamic bandwidth allocation.

As an implementation of the present disclosure, the communication slot for communication between the eONUs may be determined by an upper layer (such as the OLT) through dynamic bandwidth allocation (DBA).

The second optical signal receiving module (burst optical signal receiving module) of the enhanced optical network unit provided in the implementations of the present disclosure is connected to the receiving port, while the first optical signal receiving module (continuous optical signal receiving module) and the optical signal sending module (burst optical signal sending module) are connected to the transceiving port. The optical signal sending module and the second optical signal receiving module have the same operating wavelength, and the two ports are connected to a star coupler. Therefore, when a local communication optical signal is sent from the optical signal sending module of any enhanced optical network unit, the local communication optical signal may be transmitted to second optical signal receiving modules of other enhanced optical network units through the star coupler, so that the communication between the optical network units can be implemented without the optical line terminal, which will not occupy the bandwidth for optical line terminal downlink signals and thus improve the bandwidth utilization. Meanwhile, since the first optical signal receiving module and the optical signal sending module in implementations of the present disclosure are still connected to the transceiving port like in a conventional optical network unit, and have the same operating wavelength relationship as that in the conventional optical network unit, the original wavelength planning does not need to be changed in the implementations of the present disclosure, and during mutual communication of the enhanced optical network units, the process of sending information from an enhanced optical network unit is equivalent to the process of sending information to the optical line terminal from a conventional optical network unit (but other enhanced optical network units may directly receive the sent information), so that the mutual communication between the enhanced optical network units may be implemented through the same module as that used for communication with the optical line terminal without switching between modes, which process is simple and easy to implement. In addition, according to the implementation of the present disclosure, the enhanced optical network unit has two ports respectively connected to the interfaces of the star coupler at different sides , so that an optical signal sent from the optical signal sending module can be transmitted to other enhanced optical network units simply by passing through the star coupler once (without being reflected), and due to the reduced number of passages through the star coupler, the optical signal has a small insertion loss, which is beneficial to practical applications.

Those of ordinary skill in the art will appreciate that all or some operations, functional modules/units in the system and apparatus disclosed above may be implemented as software, firmware, hardware, and suitable combinations thereof.

In a hardware implementation, the division between the functional modules/units mentioned in the above description does not necessarily correspond to the division of physical components; for example, one physical component may have multiple functions, or one function or operation may be performed cooperatively by several physical components.

The present disclosure has disclosed example implementations, and although specific terms are employed, they are used and should be interpreted merely in a generic and descriptive sense, not for purposes of limitation. In some instances, as would be apparent to one skilled in the art, features, characteristics and/or elements described in connection with a particular implementation may be used alone or in combination with features, characteristics and/or elements described in connection with another implementation, unless expressly stated otherwise. It will, therefore, be understood by those skilled in the art that various changes in form and details may be made therein without departing from the scope of the present disclosure as set forth in the appended claims.

## Claims

1. An enhanced optical network unit, comprising a transceiving port, a receiving port, an optical signal sending module, a first optical signal receiving module, and a second optical signal receiving module; wherein
the optical signal sending module and the first optical signal receiving module are connected to the transceiving port;
the second optical signal receiving module is connected to the receiving port; and
the first optical signal receiving module has an operating wavelength being a first wavelength, while each of the optical signal sending module and the second optical signal receiving module has an operating wavelength being a second wavelength.

2. The enhanced optical network unit according to claim 1, wherein
the first wavelength is different from the second wavelength.

3. The enhanced optical network unit according to claim 1, further comprising a virtual optical line terminal module; wherein
the virtual optical line terminal module is configured to simulate operation of an optical line terminal.

4. A passive optical network, comprising a star coupler and at least two enhanced optical network units; wherein
the star coupler comprises a plurality of first side interfaces and a plurality of second side interfaces; the star coupler enables an optical signal input to any first side interface of the plurality of first side interfaces to be transmitted to any second side interface of the plurality of second side interfaces, and enables an optical signal input to any second side interface of the plurality of second side interfaces to be transmitted to any first side interface of the plurality of first side interfaces; and
each of the at least two enhanced optical network units is the enhanced optical network unit according to any one of claims 1 to 3; wherein receiving ports of the at least two enhanced optical network units are connected to the first side interfaces, and transceiving ports of the at least two enhanced optical network units are connected to the second side interfaces.

5. The passive optical network according to claim 4, further comprising an optical line terminal; wherein
the optical line terminal is connected to the first side interface.

6. The passive optical network according to claim 4, wherein
one of the at least two enhanced optical network units is a management enhanced optical network unit, which is the enhanced optical network unit according to claim 3.

7. The passive optical network according to claim 6, wherein
each enhanced optical network unit forms an enhanced optical network unit assembly with a three-port circulator;
the three-port circulator comprises a first port, a second port and a third port, wherein a signal input to the first port is transmittable and only transmittable to the second port, and a signal input to the second port is transmittable and only transmittable to the third port; and
in the enhanced optical network unit assembly, the transceiving port and the receiving port of the enhanced optical network unit are connected to the first port and the third port, respectively, and the second port is an external port of the enhanced optical network unit assembly.

8. The passive optical network according to claim 7, further comprising a plurality of three-port circulators; wherein
the first side interfaces and the second side interfaces are connected to the first port and the third port of each three-port circulator, respectively, and the external port of the enhanced optical network unit assembly is connected to the second port of each three-port circulator.

9. The passive optical network according to claim 4, wherein
the star coupler is configured to transmit an optical signal input to any first side interface to all the second side interfaces, and transmit an optical signal input to any second side interface to all the first side interfaces.

10. The passive optical network according to claim 4, further comprising at least one general-purpose optical network unit; wherein
the general-purpose optical network unit is connected to the second side interface.

11. A communication method for the passive optical network according to any one of claims 4 to 10, wherein the method comprises communication flows between enhanced optical network units; wherein in each communication flow between the enhanced optical network units, one of the enhanced optical network units is a source enhanced optical network unit, at least one of the enhanced optical network units is a target enhanced optical network unit, and the communication flow between the enhanced optical network units comprises:
transmitting, by an optical signal sending module of the source enhanced optical network unit, a local communication optical signal from the transceiving port to the second side interface of the star coupler;
transmitting, by the star coupler, the local communication optical signal to at least a first side interface connected to the target enhanced optical network unit; and
receiving, by the receiving port of the target enhanced optical network unit, the local communication optical signal.

12. The communication method according to claim 11, wherein transmitting, by the star coupler, the local communication optical signal to at least the first side interface connected to the target enhanced optical network unit comprises:
transmitting, by the star coupler, the local communication optical signal to all the first side interfaces; wherein the target enhanced optical network unit is specified by an upper layer.

13. The communication method according to claim 11, wherein
a communication slot for the communication flow between the enhanced optical network units is determined through upper layer dynamic bandwidth allocation.
